# FASCICULE DE BREVET EUROPEEN

(11) **EP 4 292 759 B1**
(45) Date de publication et mention de la délivrance du brevet: **24.09.2025**
(21) Numéro de dépôt: 23177404.3
(22) Date de dépôt: 05.06.2023
(51) Int. Cl.: B24B 19/26, F16K 17/04, B23Q 11/00, A47L 7/00, B24B 55/10, B24B 23/00, F16K 31/524

(54) **MACHINE DE PONÇAGE PNEUMATIQUE AVEC MISE EN ROUTE AUTOMATIQUE D'UN ASPIRATEUR DE POUSSIÈRES**
PNEUMATISCHE SCHLEIFMASCHINE MIT AUTOMATISCHER POSITIONIERUNG EINES STAUBSAUGERS
PNEUMATIC SANDING MACHINE WITH AUTOMATIC STARTING OF A VACUUM CLEANER

(30) Priorité: 14.06.2022 FR 2205738
(43) Date de publication de la demande: 20.12.2023
(73) Titulaire: GYS, 53940 Saint-Berthevin (FR)
(72) Inventeur: BOUYGUES, Bruno, 75016 Paris (FR)
(74) Mandataire: Vidon Brevets & Stratégie

(56) Documents cités:
- EP-B1- 1 305 138
- CN-A- 113 464 692
- FR-A1- 2 657 672
- US-B1- 6 344 782

## Description

### Domaine de l'invention

Le domaine de l'invention est celui des dispositifs d'aspiration pneumatiques, et notamment d'aspiration ou d'extraction de poussières.

De tels dispositifs d'aspiration peuvent être mis en œuvre pour aspirer les poussières créées par le fonctionnement d'un outil, tel qu'une ponceuse pneumatique par exemple, pour la réparation de carrosseries automobiles.

### Art antérieur

Dans le domaine de la réparation de carrosserie automobile, l'opération de ponçage est combinée à l'utilisation d'un dispositif d'aspiration pour collecter les particules de ponçage, notamment des particules en aluminium, ci-après également appelées poussières. En étant aspirées, les particules ne polluent pas l'air ambiant du garage et ne nuisent pas à la santé du carrossier. US 6 344 782 B1 divulgue un adaptateur de commutation pour aspirateur/ponceuse comprenant une unité de commande pneumatique 1 et un relais 2 qui met automatiquement en marche l'aspirateur pour aspirer la poussière de la ponceuse lors du fonctionnement de la ponceuse.

On connait, pour les utilisations occasionnelles ou pour les zones difficiles d'accès, des ensembles mobiles complets composés d'une centrale d'aspiration (un dispositif d'aspiration sur roues, par exemple) et d'une ponceuse électrique.

Afin de respecter la norme ATEX, les parties électriques des ponceuses électriques utilisées dans ces ensembles mobiles doivent être isolées de l'extérieur et des poussières aspirées notamment. En effet, les poussières d'aluminiums, une fois stockées, peuvent exploser en présence d'une étincelle (de moteur électrique, par exemple). Une telle isolation est relativement complexe et coûteuse à mettre en œuvre. Ainsi, le coût de ces ponceuses est très élevé, ce qui constitue un frein majeur à leur utilisation à grande échelle. De plus, dans les ateliers de carrosserie, les équipements mobiles de ponçages sont peu entretenus. Les fines particules colmatent donc le sac de collecte et les éventuels filtres, ce qui fait que l'aspiration est vite altérée. En outre, le poids de la ponceuse électrique est relativement élevé, ce qui nuit à son ergonomie. Ainsi, de manière générale, les carrossiers utilisent des ponceuses pneumatiques puisque ces dernières sont légères, maniables et ne présentent aucun risque en présence de particules d'aluminium. Les ponceuses pneumatiques sont généralement raccordées à une centrale d'aspiration, elle-même raccordée à un réseau d'air comprimé déployé dans le local du carrossier. Ainsi, la ponceuse pneumatique et le dispositif d'aspiration sont tous les deux raccordés au réseau d'air comprimé du local du carrossier.

Un inconvénient de cette solution réside dans le fait que pour obtenir un fonctionnement optimal de la ponceuse et du dispositif d'aspiration pneumatiques, il est nécessaire de fournir une alimentation en air à une pression très élevée, de l'ordre de 7 bars environ. Or, cette consommation très importante en air de la ponceuse et du dispositif d'aspiration peut engendrer des perturbations sur le réseau d'air comprimé dans son ensemble. Cela peut notamment causer des variations de débit d'air sur les autres outils du local et engendrer des problèmes de qualité, par exemple dans le cas d'un poste de peinture pneumatique raccordé à ce même réseau.

Il a été proposé des dispositifs de mise en route et d'arrêt automatique du dispositif d'aspiration selon que la ponceuse est activée ou non, de sorte à minimiser ces perturbations. La structure de ces dispositifs est toutefois complexe, et met en œuvre de nombreux composants.

Les solutions actuelles n'étant pas satisfaisantes, il existe donc un besoin de fournir une nouvelle solution d'aspiration qui permette d'obtenir un fonctionnement optimal du dispositif d'aspiration lorsqu'il est utilisé avec une ponceuse pneumatique (ou tout autre outil pneumatique) sur un réseau d'alimentation en air comprimé, sans perturber ce dernier.

### Résumé de l'invention

La technique de l'invention permet de résoudre au moins certains des inconvénients soulevés par l'art antérieur.

Plus précisément, l'invention se rapporte à une ponceuse pneumatique, notamment pour atelier de carrosserie automobile, comprenant un dispositif d'aspiration pneumatique des poussières de ponçage et un module de raccord de la ponceuse et du dispositif d'aspiration à une source d'air comprimé, ledit module de raccord comprenant :
- un conduit interne présentant une arrivée d'air reliée à une source d'air comprimé,
- une première sortie d'air alimentant en air la ponceuse (alimentation pilote) et disposée en communication avec l'arrivée d'air par un premier passage d'air,
- une deuxième sortie d'air alimentant en air le dispositif d'aspiration de poussières de ponçage et disposée en communication avec l'arrivée d'air par un deuxième passage d'air,
- un obturateur mobile monté dans le conduit interne, ledit obturateur mobile étant en position de repos, lorsque ladite ponceuse est arrêtée, et forcé par un élément à ressort pour fermer au moins partiellement le premier passage d'air et le deuxième passage d'air,
ledit module de raccord étant configuré pour :
- lorsque la ponceuse est mise en marche, ladite source d'air comprimée délivre de l'air comprimé dans ledit premier passage d'air pour forcer ledit obturateur mobile contre ledit élément à ressort de sorte à ouvrir le premier passage d'air et permettre à l'air comprimé de passer de l'arrivée d'air à la première sortie d'air et ensuite à ladite ponceuse, et en même temps pour ouvrir le deuxième passage d'air pour laisser passer l'air comprimé vers ledit moteur dudit dispositif d'aspiration, amenant ledit dispositif d'aspiration à aspirer la poussière de ladite ponceuse ;
- lorsque ladite ponceuse est arrêtée, ledit élément à ressort force ledit obturateur mobile vers sa position de repos.

L'invention propose donc un mécanisme simple, uniquement pneumatique, qui permet de mettre en route l'aspiration lorsque l'on utilise la ponceuse.

En d'autres termes, l'aspirateur pneumatique est conçu pour avoir un mode de démarrage et d'arrêt automatique selon que la ponceuse est mise en route ou arrêtée. Le principal avantage est une réduction de la consommation d'air comprimé en gardant une performance de vide optimale, et une excellente performance d'aspiration sans utiliser de composant ou de pièce électrique.

Les perturbations engendrées sur le réseau global d'alimentation en air comprimé de l'atelier par le fonctionnement du dispositif d'aspiration de poussières sont limitées. L'invention permet ainsi de fournir une solution d'aspiration particulièrement adaptée à l'aspiration des poussières, et notamment des poussières d'aluminium. En outre, le dispositif d'aspiration pneumatique selon l'invention est conforme à la norme ATEX, norme qui doit notamment être respectée dans les ateliers de carrosserie automobile. Le dispositif d'aspiration selon l'invention permet donc une utilisation sécurisée dans certains environnements dangereux/critiques.

Ainsi, l'invention propose une approche nouvelle et inventive permettant de résoudre les inconvénients de l'art antérieur en fournissant une solution d'aspiration simple à mettre en œuvre proposant des performances d'aspiration élevées pour une consommation d'air optimale.

Selon un aspect particulier de l'invention, ledit obturateur mobile comprend une première partie obturant le deuxième passage d'air vers l'aspirateur lorsque ladite ponceuse est arrêtée, ladite première partie étant prolongée par une deuxième partie reliée à l'élément à ressort et comprenant un élément de forme hémisphérique venant sensiblement au contact d'une paroi intérieure du conduit interne pour fermer au moins partiellement le premier passage d'air vers la ponceuse, le premier passage d'air s'étendant dans un canal interne de la première partie, de sorte à ce que, lorsque la ponceuse est mise en marche, le flux d'air provenant de l'arrivée d'air s'écoule dans le canal interne vers la face concave de l'élément de forme hémisphérique pour déplacer ledit élément de forme hémisphérique de l'obturateur mobile à l'écart de la paroi intérieure du conduit interne et laisser passer le flux d'air d'une part vers la première sortie d'air communiquant avec la ponceuse et d'autre part vers la deuxième sortie d'air communiquant avec l'aspirateur pneumatique.

Avantageusement, la première partie de l'obturateur mobile comprend au moins un orifice de passage du flux d'air du canal interne vers la face concave de l'élément de forme hémisphérique.

De façon avantageuse, l'élément à ressort relié à la deuxième partie de l'obturateur mobile est fixé sur une paroi du conduit interne de sorte à forcer le déplacement de l'obturateur mobile vers l'arrivée d'air et la deuxième sortie d'air lorsque la ponceuse n'est pas en marche.

Selon un aspect particulier de l'invention, un organe de manœuvre manuelle permet d'agir sur l'obturateur mobile pour le déplacer au sein du conduit interne de sa position de repos vers une position autorisant le passage du flux d'air de l'arrivée d'air vers la deuxième sortie d'air communiquant avec l'aspirateur pneumatique.

L'invention concerne également un module de raccord pour une ponceuse telle que décrit précédemment.

L'invention concerne encore une installation comprenant un réseau global d'alimentation en air comprimé comprenant au moins une ponceuse telle que décrit précédemment.

### Liste des Figures

L'invention, ainsi que les différents avantages qu'elle présente, seront plus facilement compris, à la lumière de la description qui va suivre d'un mode de réalisation illustratif et non limitatif de celle-ci, et des dessins annexés parmi lesquels :
[Fig 1] est une vue en coupe d'un module de raccord pneumatique mis en œuvre dans une ponceuse selon l'invention lorsque cette dernière n'est pas en fonctionnement ;
[Fig 2] est une vue de détail d'une partie du module de la figure 1 ;
[Fig 3] est une vue en coupe du module de la figure 1 lorsque la ponceuse est en fonctionnement ;
[Fig 4] est une vue en coupe du module de la figure 1 montrant de façon schématique l'activation manuelle du module.

### Description détaillée de l'invention

L'invention concerne une ponceuse pneumatique, notamment pour atelier de carrosserie automobile, comprenant un dispositif d'aspiration des poussières de ponçage et un module de raccord de la ponceuse et du dispositif d'aspiration à une source d'air comprimé permettant la mise en route et l'arrêt automatique du dispositif d'aspiration selon que la ponceuse est activée (ou en fonctionnement) ou désactivée (arrêtée) respectivement.

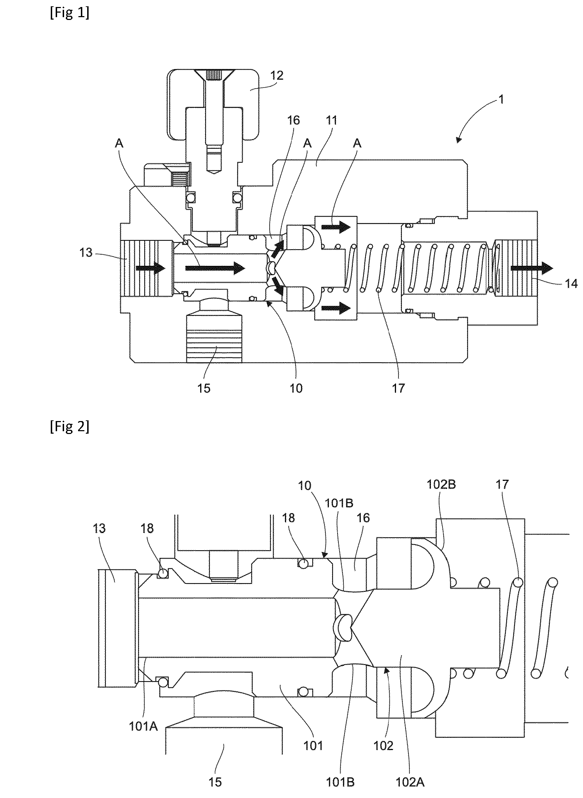

La figure 1 est une vue en coupe du module de raccord 1 pneumatique d'une telle ponceuse pneumatique dans l'état de repos, c'est-à-dire lorsque la ponceuse n'est pas en fonctionnement.

Le dispositif d'aspiration des poussières de ponçage comprend un moteur à air comprimé et un volume de collecte des poussières de ponçage (non représentés). La machine de ponçage est actionnée par un moteur à air comprimé et comprend un ou plusieurs organes de ponçage (non représentés).

Le module de raccord 1 comprend un corps 11, par exemple fabriqué dans un matériau métallique ou plastique. Le corps 11 peut être usiné/conformé, à une première extrémité, pour présenter une arrivée d'air 13 destinée à être reliée à une source d'air comprimé. Cette source correspond au réseau d'air comprimé alimentant l'ensemble de l'atelier, la pression d'air en entrée étant par exemple de l'ordre de 7 bars ou moins. L'arrivée d'air 13 prend la forme d'un logement cylindrique de connexion avec un tuyau d'alimentation en air comprimé. Le corps 11 présente à une deuxième extrémité, opposée à la première extrémité, une première sortie d'air 14 destinée à alimenter en air une ponceuse (« alimentation pilote »). Cette première sortie d'air 14 prend la forme d'un logement cylindrique de connexion avec un tuyau relié à la ponceuse. Un conduit d'air interne 16 de forme rectiligne et cylindrique s'étend dans le corps 11 entre l'arrivée d'air 13 et la première sortie d'air 14. Une deuxième sortie d'air 15 disposée à proximité de l'arrivée d'air 13 débouche dans le conduit d'air 16 interne et est destinée à alimenter en air l'aspirateur pneumatique (« alimentation pilotée »). Cette deuxième sortie d'air 15 prend la forme d'un logement cylindrique de connexion avec un tuyau relié à l'aspirateur pneumatique.

Un premier passage d'air A est défini entre l'arrivée d'air 13 et la première sortie d'air 14. Un deuxième passage d'air B est défini entre l'arrivée d'air 13 et la deuxième sortie d'air 15.

Ainsi, la première sortie d'air 14 est disposée en communication avec l'arrivée d'air 13 par le premier passage d'air A, et la deuxième sortie d'air 15 est disposée en communication avec l'arrivée d'air 13 par le deuxième passage d'air B.

Un obturateur mobile 10 est monté dans le conduit interne 16, et est forcé par un élément à ressort 17 en position de repos (figure 1) pour fermer au moins partiellement le premier passage d'air A et le deuxième passage d'air B lorsque la ponceuse n'est pas en fonctionnement.

Le conduit interne 16 présente plusieurs portions cylindriques successives de sections distinctes.

Comme illustré sur la figure 2, l'obturateur mobile 10 comprend une première partie 101 cylindrique de section variable obturant le deuxième passage d'air vers l'aspirateur lorsque la ponceuse est arrêtée sous l'effet de l'élément à ressort 17. On voit sur cette figure 2 que dans cette position de repos, le flux d'air provenant de l'arrivée d'air 13 ne peut pas passer entre la paroi intérieure du conduit interné 16 et la paroi extérieure de la première partie 101 cylindrique de l'obturateur mobile 10 vers la deuxième sortie d'air 15. L'extrémité biseautée de la première partie 101 est plaquée contre la paroi de l'arrivée d'air 13 et porte un joint d'étanchéité 18 périphérique qui empêche l'air de pénétrer le conduit interne 16 vers l'aspirateur.

La première partie 101 de l'obturateur mobile 10 est prolongée par une deuxième partie 102 reliée à une extrémité de l'élément à ressort 17 qui s'étend selon l'axe longitudinal du conduit interne 16, l'autre extrémité de l'élément à ressort 17 étant solidarisée à une paroi intérieure du conduit interne 16 au niveau de la première sortie d'air 14 communiquant avec l'aspirateur.

La première partie de l'élément obturateur porte à la périphérie de son autre extrémité longitudinale un deuxième joint d'étanchéité circulaire assurant l'étanchéité avec les parois intérieures du conduit interne 16.

La deuxième partie 102 de l'obturateur mobile 10 comprend un noyau 102A cylindrique autour duquel s'étend un élément de forme hémisphérique 102B (ou de forme en parachute) dont le bord périphérique vient sensiblement au contact d'une paroi intérieure du conduit interne 16 pour fermer au moins partiellement le premier passage d'air vers la ponceuse. Dans cette position de repos de l'obturateur mobile 10 (figures 1 et 2), le diamètre de l'élément hémisphérique 102B est légèrement inférieur au diamètre intérieur du conduit interne 16 autorisant un léger passage d'air vers la deuxième sortie d'air 15 communiquant avec la ponceuse. Au repos, le débit d'air du premier passage d'air A est insuffisant pour s'opposer à la force de l'élément à ressort 17 et déplacer l'obturateur mobile.

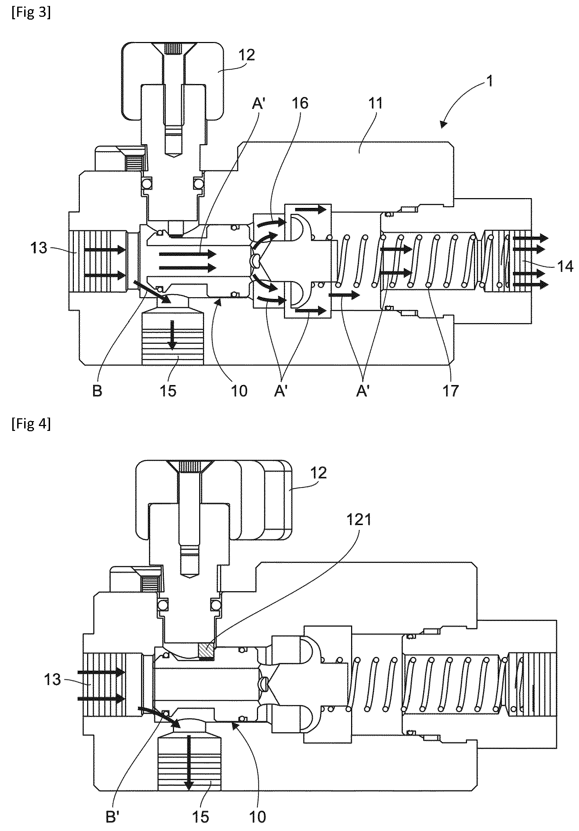

Le premier passage d'air A défini entre l'arrivée d'air 13 et la première sortie d'air 14 s'étend d'abord dans un canal interne 101A cylindrique ménagé au centre de la première partie 101 de l'obturateur mobile 10. Lorsque la ponceuse est mise en marche, l'arrivée d'air 13 qui est reliée au réseau global d'alimentation en air comprimé fournit un flux d'air entrant sous pression qui s'écoule dans le canal interne 101A, puis dans le conduit interne 16 par le biais d'orifices de passage 101B de l'air (reliant le canal interne 101A au conduit interne 16) qui sont ménagés à l'interface entre la première partie 101 et la deuxième partie 102 de l'obturateur mobile 10. Ces orifices de passage 101B de l'air débouchent dans le conduit interne 16 si bien que le flux d'air entrant est dirigé vers la face concave de l'élément hémisphérique 102B. Lorsque le débit du flux d'air au sein du premier passage d'air est suffisamment important pour s'opposer à la force de l'élément à ressort 17, le flux d'air déplace l'élément hémisphérique 102B de la gauche vers la droite sur les figures, et donc l'obturateur mobile 10, jusqu'à la position illustrée sur la figure 3. Dans cette position, l'élément hémisphérique 102B n'est plus en contact avec la paroi intérieure du conduit interne 16 et le flux d'air provenant des orifices de passage 101B peut donc contourner l'obturateur mobile 10 pour se diriger vers la sortie d'air 14 communiquant avec la ponceuse. Le premier passage d'air à cet instant est référencé A'. En parallèle, comme visible sur la figure 3, l'extrémité biseautée de la première partie 101 n'est plus plaquée contre la paroi de l'arrivée d'air 13 si bien qu'une partie du flux d'air entrant provenant de la première sortie d'air 13 peut s'engager dans le deuxième passage d'air vers la deuxième sortie d'air 15 communiquant avec l'aspirateur pneumatique. Dans la position de l'obturateur mobile 10 de la figure 3, le flux d'air comprimé entrant est dirigé d'une part vers la ponceuse via le premier passage d'air A' et d'autre part vers le moteur de l'aspirateur pneumatique via le deuxième passage d'air B, ce dernier étant alors apte à aspirer la poussière de la ponceuse.

Ainsi, lorsque la ponceuse est mise en marche, l'aspirateur pneumatique est également mis en marche par le biais d'un mécanisme simple de conception et uniquement mécanique.

On comprend que lorsque le fonctionnement de la ponceuse est interrompu (arrêt de la ponceuse), l'élément à ressort 17 formant ressort de rappel déplace l'obturateur mobile 10 vers la gauche ce qui referme au moins partiellement le premier passage d'air et referme le deuxième passage d'air, de sorte à couper l'alimentation en air comprimé du moteur de l'aspirateur pneumatique. Par conséquent l'aspirateur pneumatique s'éteint quasi simultanément. L'obturateur mobile 10 revient donc en position de repos.

Les flux d'air au sein du module de raccord 1 sont illustrés de manière schématique par des flèches sur les figures 1 à 3.

Pour récapituler, la figure 1 illustre le module de raccord dans l'état de repos de l'obturateur mobile 10.

L'entrée ou arrivée d'air 13 est raccordée au réseau d'air comprimé (sous pression). La ponceuse étant non active, la pression est répartie dans tout le système. Il y a un jeu entre l'obturateur mobile 10 et la paroi intérieure du conduit interne 16 qui laisse passer l'air (premier passage d'air A). Sous l'effet de l'élément à ressort 17, l'obturateur mobile 10 formant tiroir ferme le deuxième passage de l'air vers l'aspirateur pneumatique. Lorsque la ponceuse est mise en marche, la source d'air comprimée délivre de l'air comprimé dans le premier passage d'air pour forcer l'obturateur mobile 10 contre l'élément à ressort 17 de sorte à ouvrir davantage le premier passage d'air A' et permettre à l'air comprimé de passer de l'arrivée d'air 13 à la première sortie d'air 14 et ensuite à la ponceuse, et en même temps pour ouvrir le deuxième passage d'air B pour laisser passer l'air comprimé vers le moteur de l'aspirateur pneumatique, amenant l'aspirateur pneumatique à aspirer la poussière de la ponceuse. La figure 3 illustre l'actionnement automatique de l'aspirateur lorsque la ponceuse est actionnée. Dans ce cas de figure, la ponceuse consomme de l'air comprimé (augmentant le débit d'air). L'air provenant de l'arrivée d'air 13 emprunte le premier passage d'air A et circule ainsi dans le canal interne 101A et passe dans le conduit interne 16 par le biais des orifices 101B de passage de l'air reliant le canal interne 101A au conduit interne 16. Lorsque le débit d'air est suffisant pour s'opposer à la force de l'élément à ressort 17 et déplacer l'élément hémisphérique 102B, l'obturateur mobile 10 se déplace vers la droite (c'est-à-dire vers la première sortie d'air 14). Le diamètre de l'élément hémisphérique est inférieur au diamètre interne du conduit interne si bien que le flux d'air comprimé passe avec un plus gros débit vers la première sortie 14 communiquant avec la ponceuse. En outre, le deuxième passage d'air B n'est plus obturé par l'obturateur mobile 10 et le flux d'air entrant peut aussi passer de l'arrivée d'air 13 vers la deuxième sortie d'air 15.

La figure 4 illustre l'ouverture manuelle du deuxième passage d'air vers l'aspirateur. Pour ce faire, le module de raccord 1 est équipé d'une manette, ou organe de manœuvre manuelle, 12. Par rotation de la manette 12, une came 121 vient déplacer l'obturateur mobile 10 vers la droite, à l'écart de l'arrivée d'air 13. De ce fait le flux d'air comprimé provenant de l'arrivée d'air 13 peut passer vers la deuxième sortie d'air 15 via le deuxième passage d'air B'.

Il peut être prévu des moyens de réglage (une vis par exemple) de la force de l'élément à ressort 17 formant ressort de rappel.

L'élément à ressort peut être un ressort à spirale ou tout autre type de ressort, ou bien encore une pièce mécanique fabriquée dans un matériau spécifique.

## Revendications

1. Ponceuse pneumatique, notamment pour atelier de carrosserie automobile, comprenant un dispositif d'aspiration pneumatique des poussières de ponçage et un module de raccord (1) de la ponceuse et du dispositif d'aspiration à une source d'air comprimé, ledit module de raccord (1) comprenant :
- un conduit interne (16) présentant une arrivée d'air (13) reliée à la source d'air comprimé,
- une première sortie d'air (14) alimentant en air la ponceuse et disposée en communication avec l'arrivée d'air (14) par un premier passage d'air (A, A'),
- une deuxième sortie d'air (15) alimentant en air le dispositif d'aspiration de poussières de ponçage et disposée en communication avec l'arrivée d'air (13) par un deuxième passage d'air (B),
- un obturateur mobile (10) monté dans le conduit interne (16), ledit obturateur mobile (10) étant en position de repos lorsque ladite ponceuse est arrêtée, et forcé par un élément à ressort (17) pour fermer au moins partiellement le premier passage d'air (A) et le deuxième passage d'air (B), **caractérisée en ce que** ledit module de raccord (1) est configuré pour :
- lorsque la ponceuse est mise en marche, ladite source d'air comprimée délivre un flux d'air comprimé dans ledit premier passage d'air (A, A') pour forcer ledit obturateur mobile (10) contre ledit élément à ressort (17) de sorte à ouvrir le premier passage d'air (A, A') et permettre au flux d'air de passer de l'arrivée d'air (13) à la première sortie d'air (14) et ensuite à ladite ponceuse, et en même temps pour ouvrir le deuxième passage d'air (B) pour laisser passer le flux d'air vers ledit moteur dudit dispositif d'aspiration, amenant ledit dispositif d'aspiration à aspirer la poussière de ladite ponceuse ;
- lorsque ladite ponceuse est arrêtée, ledit élément à ressort (17) force ledit obturateur mobile (10) vers sa position de repos.

2. Ponceuse selon la revendication 1, **caractérisée en ce que** ledit obturateur mobile (10) comprend :
une première partie (101) obturant le deuxième passage d'air (B) vers l'aspirateur lorsque ladite ponceuse est arrêtée, ladite première partie (101) étant prolongée par une deuxième partie (102) reliée à l'élément à ressort (17) et comprenant un élément de forme hémisphérique (102B) venant sensiblement au contact d'une paroi intérieure du conduit interne (16) pour fermer au moins partiellement le premier passage d'air (A, A') vers la ponceuse,
le premier passage d'air (A, A') s'étendant dans un canal interne (101A) de la première partie (101), de sorte à ce que, lorsque la ponceuse est mise en marche, le flux d'air provenant de l'arrivée d'air (13) s'écoule dans le canal interne (101A) vers la face concave de l'élément de forme hémisphérique (102B) pour déplacer ledit élément de forme hémisphérique (102B) de l'obturateur mobile (10) à l'écart de la paroi intérieure du conduit interne (16) et laisser passer le flux d'air d'une part vers la première sortie d'air (14) communiquant avec la ponceuse et d'autre part vers la deuxième sortie d'air (15) communiquant avec l'aspirateur pneumatique.

3. Ponceuse selon la revendication 2, **caractérisée en ce que** la première partie (101) de l'obturateur mobile (10) comprend au moins un orifice (101B) de passage du flux d'air du canal interne (101A) vers la face concave de l'élément de forme hémisphérique (102B).

4. Ponceuse selon la revendication 2 ou 3, **caractérisée en ce que** l'élément à ressort (17) relié à la deuxième partie (102) de l'obturateur mobile (10) est fixé sur une paroi du conduit interne (16) de sorte à forcer le déplacement de l'obturateur mobile vers l'arrivée d'air (13) et la deuxième sortie d'air (15) lorsque la ponceuse n'est pas en marche.

5. Ponceuse selon l'une des revendications précédentes, **caractérisé en ce qu'**un organe de manœuvre manuelle permet d'agir sur l'obturateur mobile pour le déplacer au sein du conduit interne (16) de sa position de repos vers une position autorisant le passage du flux d'air de l'arrivée d'air (13) vers la deuxième sortie d'air (15) communiquant avec l'aspirateur pneumatique.

6. Installation comprenant un réseau global d'alimentation en air comprimé comprenant au moins une ponceuse pneumatique selon l'une des revendications 1 à 5.

## Patentansprüche

1. Pneumatische Schleifmaschine, insbesondere für Automobilkarosseriewerkstatt, die eine pneumatische Absaugvorrichtung des Schleifstaubs und ein Anschlussmodul (1) der Schleifmaschine und der Absaugvorrichtung an eine Pressluftquelle umfasst, wobei das Anschlussmodul (1) Folgendes umfasst:
- eine interne Leitung (16), die einen Lufteingang (13), der mit der Pressluftquelle verbunden ist, aufweist,
- einen ersten Luftausgang (14), der die Schleifmaschine mit Luft versorgt und in Kommunikation mit dem Lufteingang (14) durch eine erste Luftpassage (A, A') angeordnet ist,
- einen zweiten Luftausgang (15), der die Schleifstaubabsaugvorrichtung mit Luft versorgt und in Kommunikation mit dem Lufteingang (13) durch eine zweite Luftpassage (B) angeordnet ist,
- einen beweglichen Verschluss (10), der in der internen Leitung (16) montiert ist, wobei der bewegliche Verschluss (10) in Ruheposition ist, wenn die Schleifmaschine ausgeschaltet ist, und durch ein Federelement (17) dazu forciert wird, die erste Luftpassage (A) und die zweite Luftpassage (B) mindestens teilweise zu schließen,
**dadurch gekennzeichnet, dass** das Anschlussmodul (1) konfiguriert ist damit:
- wenn die Schleifmaschine eingeschaltet wird, die Pressluftquelle einen Pressluftstrom in die erste Luftpassage (A, A') abgibt, um den beweglichen Verschluss (10) gegen das Federelement (17) derart zu forcieren, dass die erste Luftpassage (A, A') geöffnet wird und es dem Luftstrom erlaubt wird, von dem Lufteingang (13) zu dem ersten Luftausgang (14) und dann zu der Schleifmaschine durchzugehen, und um gleichzeitig die zweite Luftpassage (B) zu öffnen, um den Luftstrom zu dem Motor der Absaugvorrichtung durchgehen zu lassen, indem die Absaugvorrichtung dazu gebracht wird, den Staub der Schleifmaschine abzusaugen;
- wenn die Schleifmaschine ausgeschaltet wird, das Federelement (17) den beweglichen Verschluss (10) zu seiner Ruheposition forciert.

2. Schleifmaschine nach Anspruch 1, **dadurch gekennzeichnet, dass** der bewegliche Verschluss (10) Folgendes umfasst:
einen ersten Teil (101), der die zweite Luftpassage (B) zu dem Staubsauger verschließt, wenn die Schleifmaschine ausgeschaltet wird, wobei der erste Teil (101) durch einen zweiten Teil (102) verlängert ist, der mit dem Federelement (17) verbunden ist und ein halbkugelförmiges Element (102B) umfasst, das im Wesentlichen zum Kontakt mit einer Innenwand der internen Leitung (16) gelangt, um die erste Luftpassage (A, A') zu der Schleifmaschine mindestens teilweise zu verschließen,
wobei sich die Luftpassage (A, A') in einem internen Kanal (101A) des ersten Teils (101) derart erstreckt, dass, wenn die Schleifmaschine eingeschaltet wird, der Luftstrom, der von dem Lufteingang (13) kommt, in dem internen Kanal (101A) zu der konkaven Fläche des halbkugelförmigen Elements (102B) abfließt, um das halbkugelförmige Element (102B) von dem beweglichen Verschluss (10) zu dem Abstand von der Innenwand der internen Leitung (16) zu verlagern und den Luftstrom einerseits zu dem ersten Luftausgang (14), der mit der Schleifmaschine in Kommunikation steht, und andererseits zu dem zweiten Luftausgang (15), der mit dem pneumatischen Staubsauger in Kommunikation steht, durchgehen zu lassen.

3. Schleifmaschine nach Anspruch 2, **dadurch gekennzeichnet, dass** der erste Teil (101) des beweglichen Verschlusses (10) mindestens eine Durchgangsöffnung (101B) des Luftstroms des internen Kanals (101A) zu der konkaven Fläche deshalb kugelförmigen Elements (102B) umfasst.

4. Schleifmaschine nach Anspruch 2 oder 3, **dadurch gekennzeichnet, dass** das Federelement (17), das mit dem zweiten Teil (102) des beweglichen Verschlusses (10) verbunden ist, auf einer Wand der internen Leitung (16) derart befestigt ist, dass die Verschiebung des beweglichen Verschlusses zu dem Lufteingang (13) und dem zweiten Luftausgang (15), wenn die Schleifmaschine nicht eingeschaltet ist, forciert wird.

5. Schleifmaschine nach einem der vorstehenden Ansprüche, **dadurch gekennzeichnet, dass** es ein manuelles Betätigungsorgan erlaubt, auf den beweglichen Verschluss einzuwirken, um ihn innerhalb der internen Leitung (16) von seiner Ruheposition zu einer Position zu verschieben, die das Durchgehen des Luftstroms von dem Lufteingang (13) zu dem zweiten Luftausgang (15), der mit dem pneumatischen Staubsauger in Kommunikation steht, zu verschieben.

6. Anlage, die ein globales Pressluftversorgungsnetzwerk umfasst, das mindestens eine pneumatische Schleifmaschine nach den Ansprüchen 1 bis 5 umfasst.

## Claims

1. Pneumatic sander, in particular for a car body workshop, comprising a device for pneumatic suction of the sanding dust and a module (1) for connecting the sander and the suction device to a compressed-air source, said connection module (1) comprising:
- an internal pipe (16) having an air inlet (13) connected to the compressed-air source,
- a first air outlet (14) supplying the sander with air and disposed in communication with the air inlet (14) through a first air passage (A, A'),
- a second air outlet (15) supplying the sanding dust suction device with air and disposed in communication with the air inlet (13) through a second air passage (B),
- a movable obturator (10) mounted in the internal pipe (16), said movable obturator (10) being in the idle position when said sander is stopped, and forced by a spring element (17) to at least partially close the first air passage (A) and the second air passage (B),
**characterised in that** said connection module (1) is configured to:
- when the sander is started up, said compressed-air source delivers compressed air in said first air passage (A, A') to force said movable obturator (10) against said spring element (17) so as to open the first air passage (A, A') and to enable the airflow to pass from the air inlet (13) to the first air outlet (14) and then to said sander, and at the same time to open the second air passage (B) to allow the airflow to pass to said motor of said suction device, causing said suction device to suck the dust from said sander;
- when said sander is stopped, said spring element (17) forces said movable obturator (10) towards its idle position.

2. Sander according to claim 1, **characterised in that** said movable obturator (10) comprises:
a first part (101) closing off the second air passage (B) to the extractor when said sander is stopped, said first part (101) being extended by a second part (102) connected to the spring element (17) and comprising a hemispherical-shaped element (102B) coming substantially in contact with an interior wall of the internal pipe (16) to at least partially close the first air passage (A, A') towards the sander,
the first air passage (A, A') extending in an internal channel (101A) of the first part (101), so that, when the sander is started up, the airflow coming from the air inlet (13) flows in the internal channel (101A) towards the concave face of the hemispherical-shaped element (102B) to move said hemispherical-shaped element (102B) of the movable obturator (10) away from the interior wall of the internal pipe (16) and to allow the airflow to pass firstly towards the first air outlet (14) communicating with the sander and secondly towards the second air outlet (15) communicating with the pneumatic extractor.

3. Sander according to claim 2, **characterised in that** the first part (101) of the movable obturator (10) comprises at least one orifice (101B) for the airflow to pass from the internal channel (101A) to the concave face of the hemispherical-shaped element (102B).

4. Sander according to claim 2 or 3, **characterised in that** the spring element (17) connected to the second part (102) of the movable obturator (10) is secured to a wall of the internal pipe (16) so as to force the movement of the movable obturator towards the air inlet (13) and the second air outlet (15) when the sander is not running.

5. Sander according to one of the preceding claims, **characterised in that** a manual-manoeuvring member makes it possible to act on the movable obturator to move it in the internal pipe (16) from its idle position to a position allowing the airflow to pass from the air inlet (13) to the second air outlet (15) communicating with the pneumatic extractor.

6. Plant comprising a general network for supplying compressed air comprising at least one pneumatic sander according to one of claims 1 to 5.
